# EUROPEAN PATENT APPLICATION

(11) **EP 1 598 747 A2**
(43) Date of publication of application: **23.11.2005**
(21) Application number: 03257984.9
(22) Date of filing: 18.12.2003
(51) Int. Cl.: G06F 15/78

(54) **Programmable configuration integrated circuit**

(30) Priority: 03.11.2003 US 699764
(71) Applicant: MACRONIX INTERNATIONAL CO., LTD., Hsinchu (TW)
(72) Inventor: Sun, Albert, Hsinchu (TW); Sheu, Eric, Hsinchu (TW); Chen, Shih-Liang, Fengyuan (TW)
(74) Representative: Horner, David Richard

(57) **Abstract**

A system-on-a-chip integrated circuit that includes a configurable logic array, a processor core, and a memory adapted to store instructions for a mission function, and instructions for a configuration load function used to load configuration data on to the integrated circuit via an input port on the integrated circuit from an external source. The processor fetches and executes the instructions from the memory. Configuration data received using the configuration load function is used to configure the configurable logic array.

## Description

### BACKGROUND OF THE INVENTION

### Field of the Invention

The present invention relates to an integrated circuit having a programmable configuration. Embodiments of the present invention relate to system-on-a-chip integrated circuits, and other processor devices including embedded configurable logic arrays adapted to be used as application specific or custom on-chip logic.

### Description of Related Art

Configurable logic arrays, including for example products known as programmable logic devices PLDs and field programmable gate arrays FPGAs, and known more generally as programmable logic arrays PLAs, of greater and greater density are being designed. The technology for configuring such high-density devices typically requires specialized logic on the chip, or running in a host processor in communication with the configurable logic array, usually across a system bus. Management of configuration data for the configurable logic array core requires complex logic. See U.S. Patent No. 6,049,222 to Lawman. The specialized technology for configuring the devices limits environments in which the technology can be applied.

Configurable logic arrays are configurable by a user by loading a configuration data set specifying a configuration of programmable elements on the device, referred to herein as programmable configuration points, to perform a user specified function. For example, field programmable gate arrays FPGAs include an array of logic elements and wiring interconnections with thousands of programmable interconnects that are programmable in the field using configuration data. The configuration data is stored in configuration points made of memory elements on the chip, usually implemented with SRAM-like memory cells. Other configurable logic arrays include nonvolatile configuration memory, implemented using ROM, flash or EPROM like memory cells.

Charge programmable, nonvolatile memory elements have been used for programmable switches and for other configuration points in configurable logic arrays. See U.S. Patent No. 5,247,478, U.S. Patent No. 5,764,096 and U.S. Patent No. 6,122,209.

One problem associated with configurable logic arrays is the loading of configuration data on the chip, while it is mounted on a printed circuit board, or otherwise incorporated into a functioning system. See, U.S. Patent No.4,879,688, entitled IN-SYSTEM PROGRAMMABLE LOGIC DEVICE; U.S. Patent No. 5,995,744, entitled NETWORK CONFIGURATION OF PROGRAMMABLE CIRCUITS; U.S. Patent No. 6,028,445, entitled DECODER STRUCTURE AND METHODS FOR FPGA CONFIGURATION; U.S. Patent No. 6,049,222, entitled CONFIGURING AN FPGA USING EMBEDDED MEMORY; and U.S. Patent No. 6,102,963, entitled ELECTRICALLY ERASABLE AND REPROGRAMMABLE, NONVOLATILE INTEGRATED STORAGE DEVICE WITH IN-SYSTEM PROGRAMMING AND VERIFICATION (ISPAV) CAPABILITIES FOR SUPPORTING IN-SYSTEM RECONFIGURATION OF PLDs.

System-on-a-chip SOC devices increase the complexity of the system even more. Thus, an SOC system is hard to design and expensive to change. By adding a configurable logic array to a processor core, the logic associated with the processor core can be changed and designed more easily. Thus, logic in the configurable logic array can be configured using industry tools associated with the programmable logic used, while the processor core can be programmed using conventional software programming technologies. Nonetheless, the problem of management of configuration data for the configurable logic array modules remains. SOC technology suffers the classic problem of complex systems, that they are hard to design and expensive to change. Combining a configurable logic array with a processor core is one way in which the ability to change the logic associated with the processor is improved, by allowing the logic to be configured using PLA configuration tools.

There is a need for greater flexibility in system-on-a-chip design, and improved techniques for managing the configuration of the configurable logic.

The present invention seeks to provide greater flexibility for system-on-a-chip design using embedded configurable logic, and provides for configuration load of the configurable logic.

### SUMMARY OF THE INVENTION

Aspects of the present invention are set out in the accompanying claims.

Embodiments of the present invention provide a system-on-chip integrated circuit that includes a configurable logic array, a processor core, and a memory adapted to store instructions for a mission function for the system-on-a-chip, and instructions for a configuration load function used to load configuration data onto the integrated circuit via an input port on the integrated circuit from an external source. The processor fetches and executes the instructions from the memory.

In some embodiments, the memory also stores instructions for a configuration function used to load the configuration data in electrically programmable configuration points within the configurable logic array; although in some embodiments, the configuration function is executed using dedicated logic associated with the configurable logic array. An interface between the processor and the configurable logic array or configuration logic on the chip supports the configuration function.

The memory includes a first memory array for storing the instructions for a configuration load function, which in one embodiment is a nonvolatile memory, such as a read-only memory, a floating gate memory, a nitride MOS memory or the like. Likewise, the instructions for the configuration function may be stored in the first memory array. Preferably, the instructions for the configuration load function are stored in a programmable memory, so that the configuration load function may be altered in-circuit to adapt to various remote sources of configuration data, and to protocols used for establishing a communication channel with the remote sources.

By providing the instructions for the configuration function and/or the configuration load function on-chip, in a manner configured to be executed by the processor core, the system-on-a-chip integrated circuit of the present invention can be applied easily to a wide variety of environments, in which configuration load of the configurable logic array is desirable.

The mission function includes user and/or application specific instructions that accomplish the mission of the system while in use. The memory includes a memory array storing the instructions for the mission function implemented in one embodiment using volatile memory, such as high-speed SRAM or DRAM. In other embodiments, the memory array storing instructions for the mission function may include nonvolatile memory, such as a read-only memory, a floating gate memory, a nitride MOS memory or the like. Also, in some embodiments, the memory storing instructions for the mission function may include combinations of volatile and nonvolatile memory.

In other embodiments, instructions for an in-system configuration load and for the configuration load of the mission function are stored in nonvolatile memory on the chip. In this manner, both loading of configuration data for the configurable logic array, and instructions used for the mission function can be programmed into the system-on-a-chip after the chip has been implemented in a circuit board or other system.

In some embodiments, the configuration load function and/or the configuration function include a process using a watchdog timer, and the integrated circuit includes watchdog timer circuitry coupled with the processor.

The configurable logic array has a programmable configuration defined by configuration data stored in electrically programmable configuration points within the configurable logic array. For example, the electrically programmable configuration points comprise floating gate memory cells, or other charge programmable, nonvolatile memory cells. The configuration data is transferred into the configuration points during configuration of the configurable logic array.

In some embodiments, a programmable configuration memory is included on the integrated circuit, and adapted to store the configuration data. According to these embodiments, the configuration function includes transferring the configuration data from the configuration memory to the programmable configuration points within the configurable logic array. Also, the configuration load function includes loading the configuration data into the configuration memory from remote sources of data through an input port on the system-on-a-chip integrated circuit. In some embodiments, the programmable configuration memory is implemented using nonvolatile, programmable memory cells, such as floating gate memory, or other charge programmable nonvolatile memory. In some embodiments, the programmable configuration memory is implemented using high-speed SRAM, to support rapid configuration changes of the configurable logic array. Also, some embodiments include both nonvolatile and high-speed volatile memory to support storage and manipulation on-chip of configuration data.

In yet other embodiments, the processor core is responsive to an initialization event, such as a reset, to execute the configuration load and configuration functions. Embodiments of an SOC integrated circuit according to the present invention include a watchdog timer, which causes an initialization event upon expiry of a watchdog timer interval. The configuration load function includes a procedure for setting a watchdog timer interval appropriate to the procedure used to receive the configuration data from a remote source, and if the interval expires, then an initialization function is executed including a retry of the configuration load function.

In yet other embodiments, the memory stores instructions for a configuration load function, for the mission function and for the configuration function. In such embodiments, a first configuration load function is stored in protected memory that is protected from overwriting or modification by the configuration load function. The first configuration load function provides a channel for providing configuration data from a default location built in to the protected memory. A second configuration load function is stored in unprotected memory, and used for communication with remote sources of configuration data, which may vary from the default location. If an initialization event occurs during execution of a configuration load operation to change the second configuration load function, then the first configuration load function may be used to recover operation of the configuration load operation.

Further particular and preferred aspects of the present invention are set out in the accompanying independent and dependent claims. Features of the dependent claims may be combined with features of the independent claims as appropriate, and in combinations other than those explicitly set out in the claims.

### BRIEF DESCRIPTION OF THE DRAWINGS

The present invention will be described further, by way of example only, with reference to preferred embodiments thereof as illustrated in the accompanying drawings, in which:
Fig. 1 is a simplified block diagram of a system-on-a-chip SOC integrated circuit according to one embodiment of the present invention.
Fig. 2 is a simplified block diagram of an SOC integrated circuit according to another embodiment of the present invention.
Fig. 3 is a simplified block diagram of yet another SOC integrated circuit according to the present invention.
Fig. 4 is a more detailed functional diagram of any SOC integrated circuit according to the present invention.
Fig. 5 is a functional diagram of an SOC integrated circuit including on-chip configuration data memory according to one embodiment of the present invention.
Fig. 6 is a functional diagram of an SOC integrated circuit including on-chip configuration data memory according to another embodiment.
Fig. 7 is a functional diagram of an SOC integrated circuit including on-chip configuration data memory and supporting encryption/decryption and/or compression/decompression functions according to an embodiment of the present invention.
Fig. 8 provides a heuristic diagram of the environment of deployment of the SOC integrated circuit according to the present invention, where configuration data is provided by remote sources and the SOC integrated circuit allows for configuration load of the configuration load function to establish channels of communication with such

### DETAILED DESCRIPTION

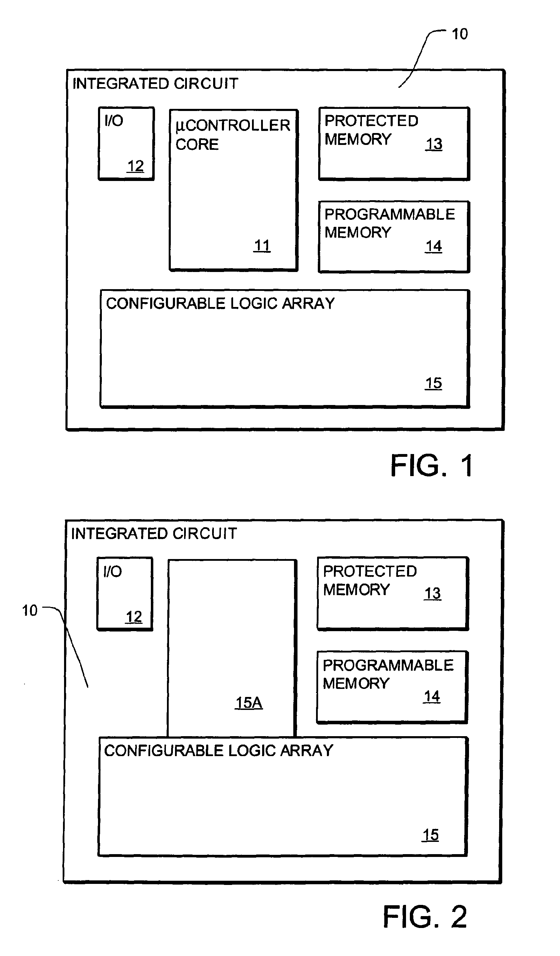

A detailed description of embodiments of the present invention is provided with reference to Figs. 1-8. A basic SOC integrated circuit 10 is shown in Fig. 1. The integrated circuit includes a microcontroller core module 11, such as standard 8051 or ARM module as known in the art. In alternatives, the microcontroller core module 11 is replaced or supplemented by other data processor cores, such as digital signal processor cores, high-performance RISC processor cores, or other microprocessor or digital signal processor modules. Protected memory 13 and programmable memory 14 are included on the integrated circuit 10. The protected memory 13 typically stores instructions for boot functions and the like, which are protected from overwriting or modification. The programmable memory 14 typically stores instructions for a mission function for the integrated circuit 10. Input/output structures 12 are included on the integrated circuit 10, supporting one or both of serial and parallel data channels into and out of the integrated circuit 10.

In the integrated circuit 10, a configurable logic array 15 is included to supplement the processor core 11. The configurable logic array 15 is implemented using field programmable gate arrays, or other types of configurable logic modules. The configurable logic array 15 includes configuration points storing configuration data for the configurable logic array 15 which define its function. Typically, a configurable logic array 15 is included on a system-on-a-chip integrated circuit for the purpose of supplementing the mission function, performing specialized logic.

One of the protected memory 13 and the programmable memory 14 stores instructions to be executed by the processor core 11. The instructions include logic to carry out configuration functions for transferring the configuration data into the configuration points in the configurable logic array in 15. The instructions also include logic to carry out configuration load to establish a communication channel through the input/output ports 12 for loading configuration data onto the integrated circuit from an external source.

Fig. 2 is a simplified block diagram of an alternative embodiment of the SOC integrated circuit 10. According to the embodiment of Figure 2, an on-chip processor is implemented by a segment 15A of the configurable logic array 15. Configuration data for the segment 15A is stored in nonvolatile configuration points within the segment 15A or, alternatively, within protected memory 13 on the integrated circuit. Upon initialization of the integrated circuit, the configuration data is transferred from the protected memory 13 to the segment 15A in this embodiment. The processor implemented by segment 15A of the configurable logic array executes instructions in a manner similar to a microcontroller core 11 or other processor core.

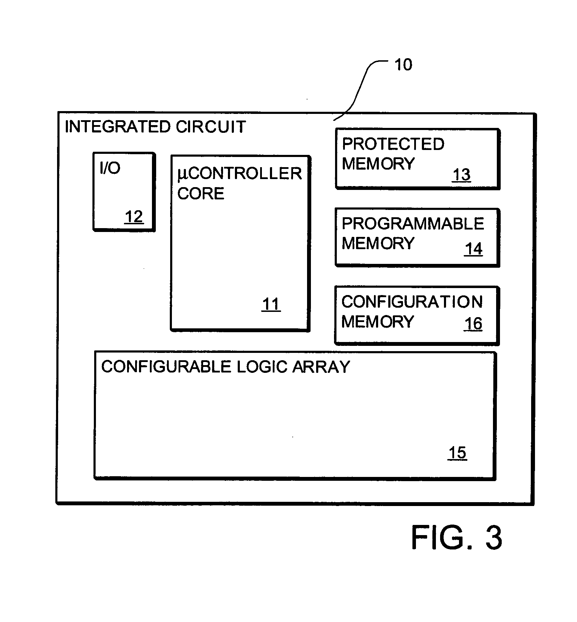

Fig. 3 is a simplified block diagram of yet another alternative embodiment of the SOC integrated circuit 10 according to the present invention. In the embodiment of Fig. 3, configuration memory 16 is included on-chip. Configuration memory stores configuration data for the configurable logic array 15 which is transferred into the configurable logic array upon initialization, either under control of a microcontroller core 11, or other configuration logic on the chip. The configuration memory 16 may be implemented using read-only memory, to establish a minimum set of configuration data for the configurable logic array during manufacture. In an alternative system, the configuration memory 16 is programmable, and can be loaded from external sources using a configuration load function under control instructions executed by the microcontroller core 11. In yet other systems, the configuration memory 16 is a combination of read-only memory and programmable memory.

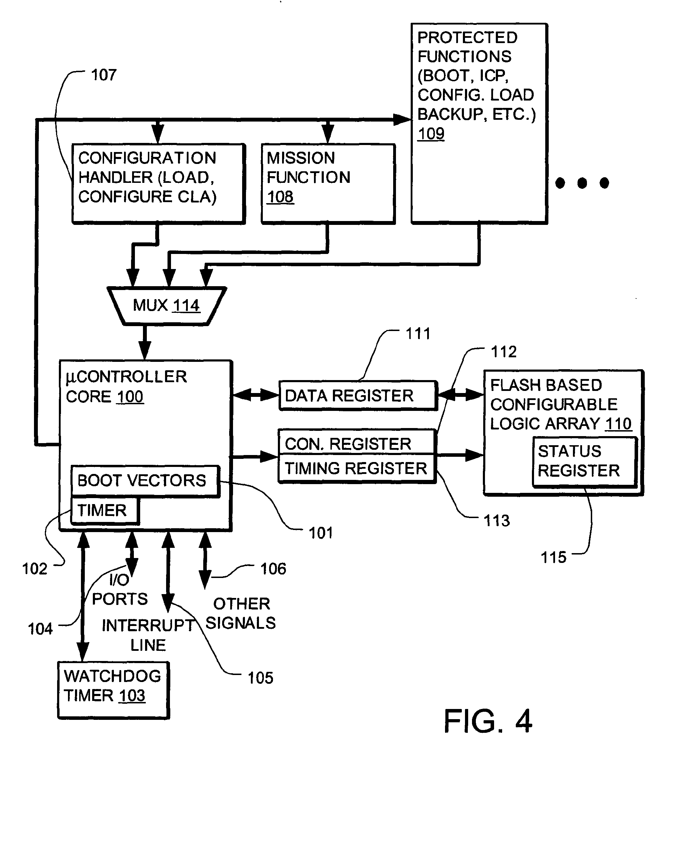

Fig. 4 is a more detailed functional diagram of an SOC integrated circuit, according to an embodiment of the invention. The components illustrated in Fig. 4 are all implemented on a single integrated circuit, according to more preferred embodiments of the invention. The chip includes a microcontroller core 100, implemented using special-purpose circuits, or as mentioned with respect to Fig. 2, using a segment of a configurable logic array. The microcontroller core 100 includes boot vectors 101 and timer circuitry 102 used in support of a watchdog timer 103. The microcontroller core 100 supports input/output ports 104, at least one interrupt line 105 and other signal inputs and outputs 106. Memory on the integrated circuit stores instructions to be executed by the microcontroller core. The memory includes the first memory array 107 storing instructions for a configuration handler, which includes a configuration load function and a configuration function in support of a configurable logic array 110 on the integrated circuit. In some embodiments, the configuration handler comprises an initialization function, executed in response to an initialization event like a reset caused by an interrupt signal or a watchdog timer reset. The memory includes a second memory array 108 storing instructions for a mission function for the SOC integrated circuit. The memory includes a third memory array 109 storing protected functions, including boot functions, in-circuit program functions, and configurable logic array configuration load backup function. The third memory array 109 is protected from overwriting or modification by an ICP function, which provides for recovery of the system during initialization functions, such as reset events and failures of in-circuit program procedures or configuration load procedures.

The memory is implemented using a variety of memory cell technology, including mask ROM, flash memory, SRAM memory, and the like as suits a particular implementation. Typically the protected memory array 109 is implemented by nonvolatile memory such as mask ROM or flash memory. When implemented by flash memory or other electrically programmable memory, then logic structures are implemented to protect the memory array 109 from configuration load operations, or accidental overwriting or modification.

The configurable logic array 110 on the integrated circuit is implemented in the embodiment of Fig. 4 by a flash-based configurable logic array. In a flash-based configurable logic array, the configuration points are nonvolatile, so that the configuration data survives reset or power down events.

An interface between the microcontroller core 100 and the configurable logic array 110 is implement on the integrated circuit. The interface includes, among other structures known in the art, a data register 111, a configuration register 112, and the timing register 113, by which data, configuration data, and timing signals are traded between the modules. Status register 115 is used by the configuration function in a protocol to ensure successful configuration of the configurable logic array using the configuration data.

The microcontroller core 100 retrieves instructions from the memory, including the memory arrays 107, 108, 109 via instruction paths represented by the multiplexer 114. Other memory structures, including for example SRAM or register arrays, included on the integrated circuit support the functions executed by the microcontroller core 100 or the configurable logic array 110.

In the embodiment illustrated in Fig. 4, the configuration load function of the configuration handler stored in the first memory array 107 establishes a communication channel between the SOC integrated circuit and a remote source of configuration data. The communication channel receives configuration data via an I/O port 104. The configuration data is passed via the configuration register 112 by the configuration function in the configuration handler to the flash-based configuration points in the configurable logic array 110.

In the event of a reset or other initialization event during a configuration load operation, the configuration load function is reexecuted.

An ICP program may also be stored in memory, such as in protected memory 109, or elsewhere, which is used for overwriting or modifying the configuration handler, so that the configuration load function can be adapted to receive configuration data from user selected remote sources. According to these embodiments of the invention, a configurable logic array configuration load backup function is stored in the protected memory array 109. In the event of corruption of the configuration handler stored in memory array 107, the system can be recovered using functions stored in the protected memory array 109. In-circuit program functions suitable for use according to the present invention are described in detail in U.S. Patent No. 6,401,221, U.S. Patent No. 6,493,788, and U.S. Patent No. 5,901,330.

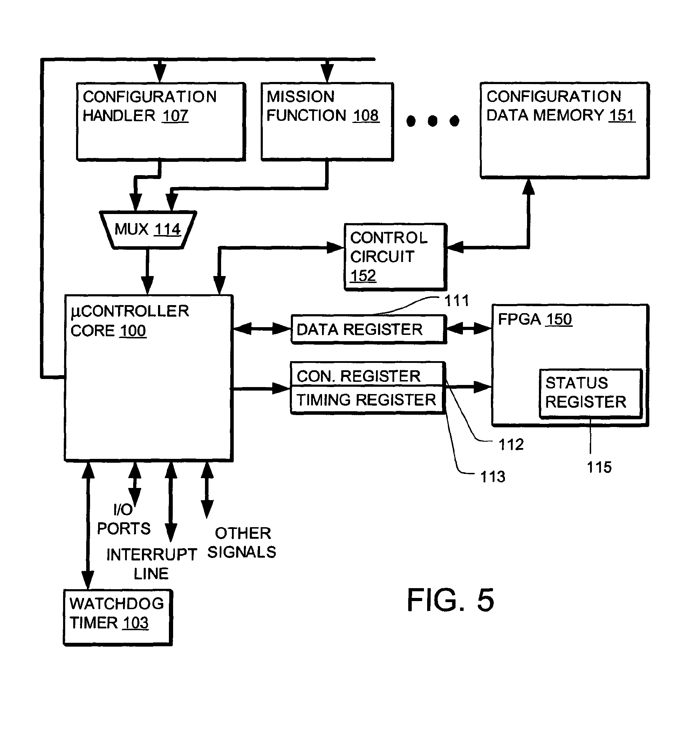

Fig. 5 illustrates an alternative architecture for a system-on-a-chip integrated circuit of one embodiment, in which similar components are given the same reference numerals as used in Fig. 4. According to the alternative shown in Fig. 5, the configurable logic array 150 need not be implemented using a flash-based or other nonvolatile configuration point based configurable logic array. For example, the configurable logic array 150 may be implemented using a standard field programmable gate array FPGA having SRAM-based configuration points.

Configuration data for the configurable logic array 150 is stored in a nonvolatile configuration data memory array 151 which is implemented as a portion of the memory of the integrated circuit accessible by the microcontroller core 100. A control circuit 152 is used in this embodiment, to act as an interface between the configuration data memory 151 and the microcontroller core 100. The configuration load function of the configuration handler in array 107 operates to establish a channel between remote source and the configuration data memory 151. The configuration function of the configuration handler on array 107 operates to transfer configuration data from the configuration data memory 151 via the microcontroller core 100 to the configurable logic array 150 during a configuration operation.

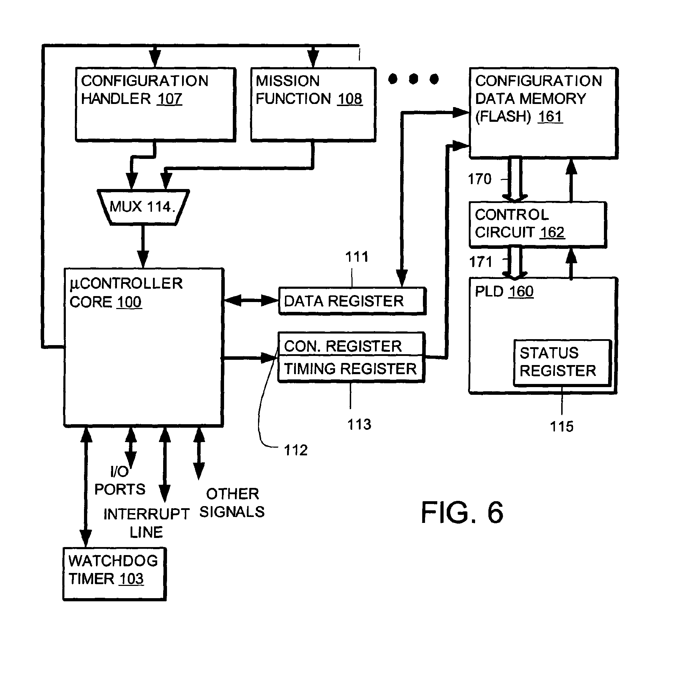

Fig. 6 illustrates an alternative architecture for a system-on-a-chip integrated circuit according to one embodiment, in which similar components are given the same reference numerals as used in Fig. 5. According to the alternative shown in Fig. 6, the configurable logic array 160 may be implemented using a programmable logic device PLD module. Configuration data for the configurable logic array 160 is stored in a nonvolatile configuration data memory array 161, which is implemented as a portion of the memory of the integrated circuit accessible by the microcontroller core 100. A control circuit 162 acts as an interface between the configuration data memory 161 and configurable logic array 160, so that the configuration function of the configuration handler 107 causes direct transfer of configuration data from the configuration data memory 161 via the data paths 170, 171 dedicated to the configuration function into the configurable logic array 160. The data paths 170, 171 may be implemented using wide parallel data paths or other high-speed, or specially configured data paths adapted for the configuration function. In this embodiment, the configuration function in the configuration handler 107 may be simplified or eliminated, and more functionality accomplished using the control circuit 162.

The configuration load function of the configuration handler in array 107 operates to establish a channel between remote source and the configuration data memory 161.

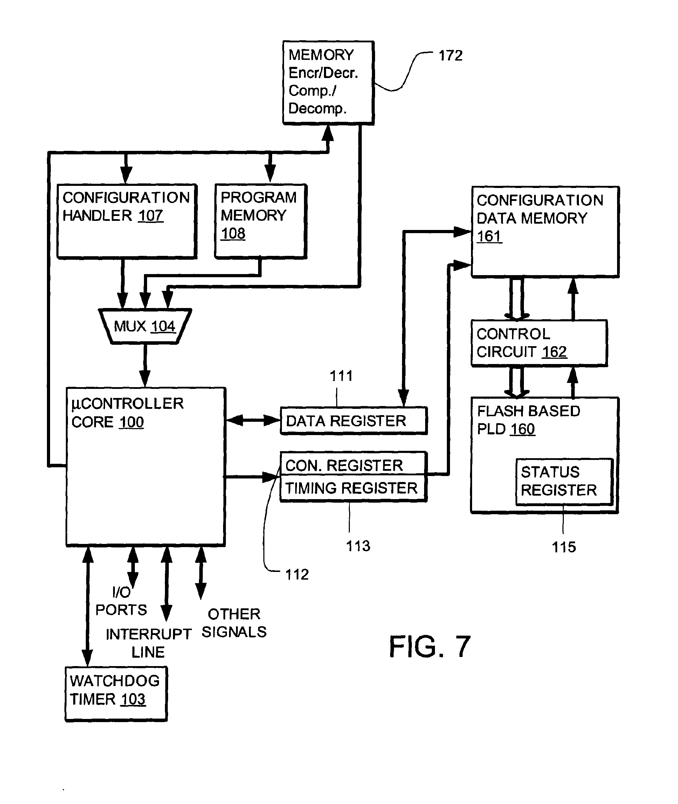

Fig. 7 illustrates an alternative architecture for a system-on-a-chip integrated circuit according to one embodiment, in which similar components are given the same reference numerals as used in Fig. 6. According to the alternative shown in Fig. 7, the memory is supplemented with a memory array 172, which stores at least one of instructions for encryption/decryption functions and instructions for compression/decompression functions. According to the embodiment of Fig. 7, the configuration load function establishes a channel between a remote source and the configuration data memory 161. The configuration data is received from the remote source in an encrypted format, in a compressed format, or in a format that is both encrypted and compressed. The configuration load function exercises the decryption and/or decompression functions from array 172 when loading configuration data into the configuration data memory 161. Alternatively, the configuration function exercises the decryption and/or decompression functions from array 172 when transferring the configuration data into the configuration points in the configurable logic array. The addition of the memory array 170 storing at least one of encryption/decryption functions and compression/decompression functions is made in various embodiments of the system-on-a-chip integrated circuit, including embodiments as described with respect to Figs. 4 and 5.

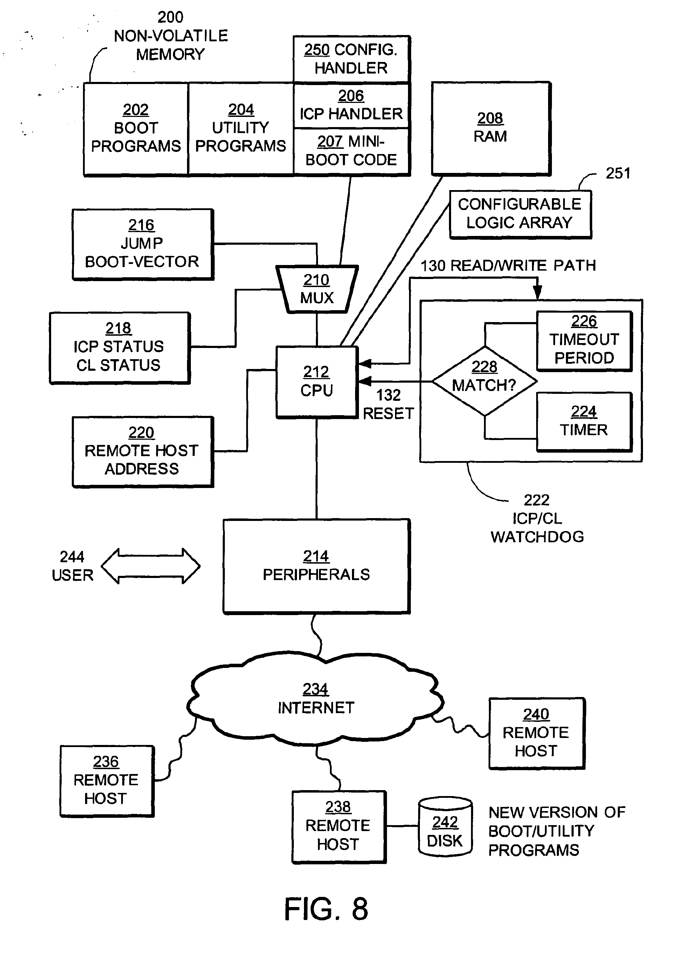

Fig. 8 is a block diagram illustrating some of the major functional components of a fault-tolerant system for in-circuit programming and configuration load in accordance with one embodiment, for an SOC integrated circuit including a processor core (CPU 212) and a configurable logic array 251. The in-circuit programming process and configuration load system includes nonvolatile memory 200, RAM 208, CPU 212 and peripherals 214. The in-circuit programming process and configuration load system also includes components which implement fault-tolerance, including jump boot vector 216, multiplexer (MUX) 210, in-circuit program/configuration load ICP/CL status register 218, remote host address register 220 and ICP/CL watchdog 222.

More specifically, CPU 212 is any type of a processing system including a microcontroller, microprocessor or digital signal processor. CPU 212 is coupled to RAM 208 which is a random access memory containing code and data executed by CPU 212. CPU 212 is additionally coupled to nonvolatile memory 200 through data paths represented by MUX 210.

Nonvolatile memory 200 is any type of memory that persists when power is removed from the system, including flash memory, EPROM, EEPROM, and ROM memory. Nonvolatile memory 200 includes boot programs 202, utility programs 204, in-circuit programming ICP handler 206, configuration handler 250 and mini-boot code 207. Boot programs 202 include a collection of programs which are executed during system initialization in order to initialize the hardware and software resources of the system. Boot programs 202 are stored in programmable memory, which can be modified during the configuration load process. Nonvolatile memory 200 also includes utility programs 204, which include programs executed by CPU 212 to perform the mission function during operation of the system. Utility programs 204 are also contained within memory that can be programmed through the in-circuit programming load process. Nonvolatile memory 200 also includes Configuration handler 250, which performs the configuration load functions of the system, and which is also contained within memory that can be programmed through the configuration load process. Nonvolatile memory 200 also includes the configuration handler 250, which is also contained within memory that can be programmed through the in-circuit programming process. The configuration handler 250 executes functions described above with respect to Figs. 4-7.

Nonvolatile memory 200 additionally includes mini-boot code 207, which is contained within a protected memory, which cannot be modified during the same in-circuit program process of normal boot and configuration handler programs. Mini-boot code 207 is an alternative set of system initialization instructions which performs many of the same functions as boot programs 202. However, mini-boot code 207 only springs into action when there is an error during an in-circuit program process which potentially causes boot programs 202, in-circuit program processes 206 or configuration handler functions 250 to be corrupted and unusable. Hence, mini-boot code 207 must be stored in memory that cannot be modified during the same in-circuit program process of normal boot programs. In one embodiment of the present invention, mini-boot code 207 is stored in mask ROM memory while boot programs 202, utility programs 204, configuration handler 250 and ICP handler 206 are stored in programmable flash memory.

CPU 212 is additionally coupled to hardware components which facilitate fault tolerance during the ICP process. CPU 212 is coupled to MUX 210, which takes as inputs nonvolatile memory 200 and jump boot vector 216, as well as a control input from ICP/CL status register 218. MUX 210 selectively switches CPU 212 between jump boot vector 216 and nonvolatile memory 200, depending upon the state of ICP/CL status 218. If ICP/CL status 218 is dirty, this indicates that a previous ICP operation or operation modifying the configuration load operation did not complete, and CPU 212 takes as input a jump instruction to a boot vector 216 during system initialization, which points to mini-boot code 207. On the other hand, if ICP/CL status 218 is clean, this indicates that no configuration load operation is in progress, and CPU 212 takes as input the initial location of nonvolatile memory 200 during system initialization. CPU 212 is additionally coupled to remote host address register 220, which contains a backup copy of the remote host address in case the system is reset during in-circuit program. CPU 212 is also coupled to ICP/CL watchdog 222 through read/write path 230 and reset line 232. ICP/CL watchdog 222 contains timeout period register 226 and timer 224 as well as match logic 228. Both timer 224 and timeout period 226 can be initialized by CPU 212 through read/write path 230. When the value of timer 224 matches timeout period 226, match logic 228 causes a reset signal to be sent across reset line 223 which feeds into CPU 212. In one embodiment, the above-mentioned hardware components to provide fault-tolerance include programmable memory elements that are protected from the in-circuit program process.

CPU 212 additionally connects to peripherals 214, which include input and output devices used to communicate with a system user, as illustrated by the double arrow on the left-hand-side of peripherals 214. Peripherals 214 also includes an interface through which peripherals 214 are coupled to Internet 234, or other communication channels or networks. Internet 234 is itself coupled to remote hosts 236, 238 and 240. Remote host 238 is coupled to disk 242 which contains new versions of boot and utility programs, including for example the new in-circuit program functions or new configuration load functions, to be downloaded through Internet 234 into the system.

The configuration load process generally operates as follows. CPU 212 communicates with user 244 through peripherals 214. User 244 causes CPU 212 to begin executing configuration handler 206, which commences the configuration load process. Configuration handler 250 causes a connection to be made through peripherals 214 to Internet 234 and through Internet 234 to remote host 238. Remote host 238 then begins downloading data from disk 242 through Internet 234 to nonvolatile memory 200. At the same time the data transfer is initiated, timeout period 226 within ICP/CL watchdog 222 is set to an estimated value and timer 224 is initialized.

If the configuration load process proceeds smoothly, the fault-tolerance features are not activated. On the other hand, if there is an excessive delay in the configuration load process, timer 224 will eventually match timeout period 226, causing a reset signal to flow through reset line 232 to CPU 212. This causes CPU 212 to initiate a boot sequence. If the system is rebooted during the configuration load process, ICP/CL status register 218 is set to a dirty value. This causes MUX 210 to direct jump boot vector 216 into CPU 212, which causes CPU 212 to boot from mini-boot code 207 instead of boot programs 202. If ICP/CL status 218 is set to a clean value, this means the configuration load process was complete, and MUX 210 causes CPU 212 to boot from boot programs 202.

Mini-boot code 207 causes CPU 212 to restart the configuration load process by first reading a value from remote host address register 220 to determine which remote host to contact in order to reinitiate the configuration load process. The configuration load process then recommences. In an alternative embodiment, the mini-boot code 207 includes a configuration load program designed to access a configuration data set from a default location, such as on-chip non-volatile memory or by communication with a host expected to be coupled with the SOC integrated circuit.

The ICP process generally operates as follows. CPU 212 communicates with user 244 through peripherals 214, some of which are typically not part of the SOC integrated circuit but rather communicate with it via input/output ports. User 244 causes CPU 212 to begin executing ICP handler 206, which commences the ICP process. ICP handler 206 causes a connection to be made through peripherals 214 to Internet 234 and through Internet 234 to remote host 238. Remote host 238 then begins downloading data from disk 242 through Internet 234 to nonvolatile memory 200. At the same time the data transfer is initiated, timeout period 226 within ICP watchdog 222 is set to an estimated value and timer 224 is initialized.

If the ICP process proceeds smoothly, the fault-tolerance features are not activated. On the other hand, if there is an excessive delay in the ICP process, timer 224 will eventually match timeout period 226, causing a reset signal to flow through reset line 232 to CPU 212. This causes CPU 212 to initiate a boot sequence. If the system is rebooted during the ICP process, ICP/CL status register 218 is set to a dirty value. This causes MUX 210 to direct jump boot vector 216 into CPU 212, which causes CPU 212 to boot from mini-boot code 207 instead of boot programs 202. If ICP/CL status 218 is set to a clean value, this means the ICP process was complete, and MUX 210 causes CPU 212 to boot from boot programs 202.

Mini-boot code 207 causes CPU 212 to restart the ICP process by first reading a value from remote host address register 220 to determine which remote host to contact in order to reinitiate the ICP process. The ICP process then recommences.

The ICP process can overwrite or modify the configuration handler in some embodiments. In such embodiments, the ICP process can first copy the configuration handler 250 to non-volatile memory to establish two copies of the configuration handler on the SOC chip. One of the copies is modified, and if the modification completes successfully, then the other copy is deleted. However, if the modification does not complete successfully, then the safe copy of the configuration handler is used to recover system operation.

One embodiment provides an in-circuit configuration architecture for embedded configurable logic array.

One embodiment provides a system-on-a-chip integrated circuit that includes a configurable logic array, a processor core, and a memory adapted to store instructions for a mission function, and instructions for a configuration load function used to load configuration data on to the integrated circuit via an input port on the integrated circuit from an external source. The processor fetches and executes the instructions from the memory. Configuration data received using the configuration load function is used to configure the configurable logic array.

Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.

## Claims

1. An integrated circuit, comprising:
an input port by which data is received from a source external to the integrated circuit;
a configurable logic array having a programmable configuration defined by configuration data stored in electrically programmable configuration points within the configurable logic array;
memory adapted to store instructions for a mission function for the integrated circuit, to store instructions for a configuration load function used to receive configuration data via said input port, and to store instructions for a configuration function used to transfer the configuration data to the programmable configuration points within the configurable logic array; and
a processor coupled to the memory which fetches and executes instructions from the memory.

2. The integrated circuit of claim 1, wherein said memory comprises a nonvolatile store.

3. The integrated circuit of claim 1 or 2, wherein said memory comprises a floating gate memory store.

4. The integrated circuit of claim 1 or 2 or 3, wherein said memory comprises a read-only memory store.

5. The integrated circuit of any preceding claim, wherein said memory comprises a first nonvolatile store for the configuration function, and a second store for the mission function.

6. The integrated circuit of any preceding claim, wherein said memory comprises a first programmable, nonvolatile store for the configuration load function, and a second store for the mission function.

7. The integrated circuit of any preceding claim, including a watchdog timer coupled to the processor, and wherein the configuration function includes using the watchdog timer to generate a reset in response to errors, and upon the reset, re-executing the configuration load function and the configuration function.

8. The integrated circuit of any one of claims 1 to 6, including a watchdog timer coupled to the processor, and wherein the configuration load function includes using the watchdog timer to generate a reset in response to errors, and upon the reset, re-executing the configuration load function.

9. The integrated circuit of any preceding claim, wherein the configuration load function includes receiving encrypted configuration data via an input port on the integrated circuit, and decrypting the configuration data.

10. The integrated circuit of any one of claims 1 to 8, wherein the configuration load function includes receiving compressed configuration data via an input port on the integrated circuit, and decompressing the configuration data.

11. The integrated circuit of any preceding claim, wherein the electrically programmable configuration points comprise floating gate memory cells.

12. The integrated circuit of any one of claims 1 to 10, wherein the electrically programmable configuration points comprise nonvolatile, charge programmable memory cells.

13. The integrated circuit of any one of claims 1 to 10, wherein the electrically programmable configuration points comprise nonvolatile, programmable memory cells.

14. The integrated circuit of any preceding claim, including:
an interface between the processor and the configurable logic array supporting said configuration load function.

15. The integrated circuit of any preceding claim, wherein said memory stores instructions for an in-circuit programming function to write or modify instructions for the configuration load function.

16. The integrated circuit of any preceding claim, wherein said memory includes a protected memory array storing instructions for a first configuration load function, and a second memory array storing instructions for a second configuration load function, the first memory array being protected from alteration by an in-circuit programming function and the second memory array being accessible to be written or modified by the in-circuit programming function.

17. The integrated circuit of any preceding claim, wherein said processor comprises a configurable logic array configured to execute said instructions.

18. A method for providing for error recovery during loading of configuration data to an integrated circuit including a processor, a configurable logic array having configuration points to store the configuration data, and memory storing instructions executable by the processor including instructions for a configuration load function to load configuration data from a source external to the integrated circuit, comprising:
monitoring the loading of configuration data using the configuration load function in order to detect a delay in transmission of configuration data from a remote host; and
restarting the configuration load function if the delay exceeds a timeout value.

19. The method of claim 18, wherein the step of monitoring is performed by using a watchdog timer on the integrated circuit and coupled to the processor.

20. A method for configuring an integrated circuit including a processor, a configurable logic array having a programmable configuration defined by configuration data stored in electrically programmable configuration points within the configurable logic array, and memory storing instructions executable by the processor, the method comprising:
storing instructions in a first memory array of said memory for a mission function for the integrated circuit;
storing instructions in a second memory array of said memory for configuration load function used to receive configuration data from a source external to the integrated circuit; and
storing instructions in a third memory array of said memory for a configuration function used to transfer the configuration data to the programmable configuration points within the configurable logic array.

21. The method of claim 20, wherein said memory comprises a nonvolatile store.

22. The method of claim 20 or 21, wherein said memory comprises a floating gate memory store.

23. The method of claim 20 or 21 or 22, wherein said memory comprises a read-only memory store.

24. The method of any one of claims 20 to 23, wherein said second array of said memory comprises a first nonvolatile store for the configuration function, and first array of said memory comprises a different second store different than the first nonvolatile store for the mission function.

25. The method of any one of claims 20 to 23, wherein said second array of said memory comprises a first programmable, nonvolatile store for the configuration function, and first array of said memory comprises a different second store different than the first nonvolatile store for the mission function.

26. The method of any one of claims 20 to 25, wherein the configuration load function includes receiving encrypted configuration data via an input port on the integrated circuit, and decrypting the configuration data.

27. The method of any one of claims 20 to 25, wherein the configuration load function includes receiving compressed configuration data via an input port on the integrated circuit, and decompressing the configuration data.

28. The method of any one of claims 20 to 27, wherein the electrically programmable configuration points comprise floating gate memory cells.

29. The method of any one of claims 20 to 27, wherein the electrically programmable configuration points comprise nonvolatile, charge programmable memory cells.

30. The method of any one of claims 20 to 27, wherein the electrically programmable configuration points comprise nonvolatile, programmable memory cells.

31. The method of any one of claims 20 to 30, including:
monitoring the loading of configuration data using the configuration load function in order to detect a delay in transmission of configuration data from a remote host; and
restarting the configuration load function if the delay exceeds a timeout value.

32. The method of any one of claims 20 to 31, including:
monitoring the loading of configuration data using a watchdog timer on the integrated circuit and coupled to the processor during the configuration load function in order to detect a delay in transmission of configuration data from a remote host; and
restarting the configuration load function if the delay exceeds a timeout value.
